# EUROPEAN PATENT APPLICATION

(11) **EP 3 819 018 A1**
(43) Date of publication of application: **12.05.2021**
(21) Application number: 19382977.7
(22) Date of filing: 08.11.2019
(51) Int. Cl.: B01D 61/00

(54) **FORWARD OSMOSIS DRAW SOLUTE**

(71) Applicant: Nanogap Sub NM Powder, S.A., 15895 Ames La Coruña (ES)
(72) Inventor: LÓPEZ QUINTELA, Manuel Arturo, E-15895 Ames, A Coruña (ES); LEDO SUÁREZ, Ana, E-15895 Ames, A Coruña (ES); RODRÍGUEZ COBO, Eldara, E-15895 Ames, A Coruña (ES)
(74) Representative: ABG Intellectual Property Law, S.L.

(57) **Abstract**

The present invention refers to the use of a metal nanoparticle as draw solute in forward osmosis (FO) processes, to a water treatment method, to an apparatus for carrying out the method and to a system for forward osmosis processes.

## Description

### FIELD OF THE INVENTION

The present invention relates to forward osmosis processes and to draw solutes for forward osmosis (FO).

### BACKGROUND

Forward osmosis (FO) exploits the osmotic gradient to draw water from a low osmotic pressure solution to a high osmotic pressure solution (i.e., the draw solution) comprising a draw solute. The diluted draw solution is then treated by reverse osmosis or thermal processes to generate pure water. FO has two major advantages over the pressure-driven reverse osmosis (RO): it does not require high pressure (and therefore high energy) and the membrane is less prone to fouling. Chemicals currently employed as draw solutes for FO include salts such as NaCl and ammonium bicarbonate. Therefore, reverse osmosis or thermal treatments, both energy intensive, are required to recover water from the draw solution.

Magnetic nanoparticles have recently been explored as draw solutes. CN105879684 discloses the use of sodium citrate ferroferric oxide magnetic nanoparticles as nanoparticle draw solutions. In addition, US9242213 describes the use of a forward osmosis system using a submerged hollow fiber membrane unit and magnetic nanoparticles (iron oxide core nanoparticles with a silica shell and a dispersant) as draw solutions. Moreover, Ge et al. (Ind. Eng. Chem. Res., Vol. 50, No. 1, 2011) discloses the use of Fe₃O₄ poly(ethylene glycol)diacid-coated nanoparticles. Ge et al. discloses an FO osmotic pressure of around 73 atm was achieved using 0.065 M poly(ethylene glycol) diacid-coated magnetic nanoparticles when deionized water was used as the feed solution. The use of magnetic nanoparticles allows their separation from the diluted draw solution by employing a strong magnetic field to collect the nanoparticles. However, magnetic nanoparticles tend to become unstable and aggregate during their recovery process, losing efficiency and making difficult reusing them.

In summary, there is a need to develop new draw solutions with high colloidal stability and good recyclability, and to increase osmotic pressure values (and thereby increase the overall purification efficiency) obtained in forward osmosis processes.

### BRIEF DESCRIPTION OF THE INVENTION

The inventors of the present invention have found that by using a metal nanoparticle comprising at least one ligand; wherein the metal of the metal nanoparticle is selected from Ag, Au, Pd and Pt; wherein the nanoparticle has a mean diameter of between 0.1 and 30 nm; and wherein the at least one ligand is a compound comprising a thiol group, as draw solute in a draw solution in a forward osmosis process, high osmotic pressure values are reached in the draw solution. Moreover, the draw solute of the present invention reaches high osmolality values in solution. Another advantage over the prior art, is that said draw solute is easily separable from water and has a high stability in solution over time (it does not agglomerate or aggregate). Consequently, the draw solute of the present invention is easily recovered and recycled from the diluted draw solution generated after a forward osmosis (FO) process. Moreover, the use of metal nanoparticles instead of salts eliminates draw solute flux issues. In addition, the particles of the present invention and their byproducts are non-toxic. This approach is of great importance for a large variety of applications of FO processes in various technological fields, since it solves the current limitations of the prior art.

Thus, in a first aspect, the invention is directed to the use of a metal nanoparticle comprising at least one ligand;
wherein the metal of the metal nanoparticle is selected from Ag, Au, Pd and Pt;
wherein the nanoparticle has a mean diameter equal or more than 0.1 and equal or less than 30 nm; and
wherein the at least one ligand is a compound comprising a thiol group;
as draw solute in forward osmosis (FO) processes.

In a second aspect, the invention is directed to a method for water treatment comprising:
i. providing :
   - a feed solution comprising water and impurities;
   - a draw solution comprising water and metal nanoparticles of the present invention in any of its particular embodiments;
   - a semi-permeable membrane having a first side and an opposing second side;
ii. contacting the first side of the semi-permeable membrane with the feed solution and the opposite second side with the draw solution, to obtain a diluted draw solution; and
iii. removing at least a portion of the draw solute from the diluted draw solution of step (ii).

In a third aspect, the present invention is directed to an apparatus for carrying out the method of the present invention in any of its particular embodiments comprising:
- a first unit comprising a semi-permeable membrane.

In a further aspect, the present invention is directed to a system comprising:
- a feed solution comprising water and impurities;
- a draw solution comprising water and metal nanoparticles as defined in any of the particular embodiments of the present invention; and
- a semi-permeable membrane having a first side and an opposing second side,
wherein the first side of the semi-permeable membrane is in contact with the feed solution and the opposite second side is in contact with the osmotic draw solution.

### FIGURES

To better understand of the invention, its objects and advantages, the following figures are attached to the specification in which the following is depicted:

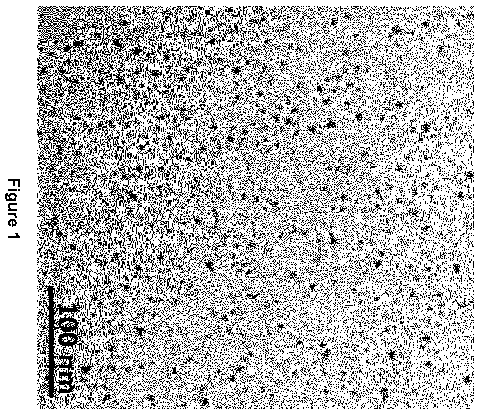

Figure 1 shows a transmission electron microscopy (TEM) micrograph.
Figure 2 shows a forward osmosis system sketch.
Figure 3 shows an experimental forward osmosis system.

### DETAILED DESCRIPTION OF THE INVENTION

Unless defined otherwise, all technical and scientific terms used herein have the same meaning as commonly understood to one of ordinary skill in the art to which this disclosure belongs. As used herein, the singular forms "a" "an" and "the" include plural reference unless the context clearly dictates otherwise for example the use of a metal nanoparticle includes the use of metal nanoparticles.

### Use

In a first aspect, the present invention is directed to the use of a metal nanoparticle comprising at least one ligand;
wherein the metal of the metal nanoparticle is selected from Ag, Au, Pd and Pt;
wherein the nanoparticle has a mean diameter equal or more than 0.1 and equal or less than 30 nm; and
wherein the at least one ligand is a compound comprising a thiol group;
as draw solute in a forward osmosis (FO) process; preferably in an aqueous forward osmosis (FO) process.

In the context of the present invention, the expression "forward osmosis process" relates to an osmotic process wherein a semi-permeable membrane has a first side in contact with a first solution (feed solution comprising impurities) and an opposing second side in contact with a second solution (draw solution) to effect a separation of solvent from impurities. The driving force for said separation is an osmotic pressure gradient, such that of the draw solution (which contains the draw solute), which induces a net flow of solvent (i.e. water) through the semipermeable membrane into the draw solution (i.e. from a low osmotic pressure solution to a high osmotic pressure solution). Thus, effectively separating part of the solvent (for example, water) in the feed solution from impurities by drawing said solvent through the membrane into the draw solution.

In the context of the present invention, the expression "draw solute" relates to the compound(s) or material(s) used in the draw solution to create an osmotic pressure in excess of the feed solution.

An additional aspect is directed to a method wherein a metal nanoparticle comprising at least one ligand;
wherein the metal of the metal nanoparticle is selected from Ag, Au, Pd and Pt;
wherein the nanoparticle has a mean diameter equal or more than 0.1 and equal or less than 30 nm; and
wherein the at least one ligand is a compound comprising a thiol group;
is provided as draw solute in forward osmosis (FO) processes.

Non-limiting examples of forward osmosis processes are desalination processes, evaporative cooling make-up water, industrial water management processes, etc. Preferably desalination processes.

### Nanoparticle

The present invention is directed to the use as draw solute in a forward osmosis (FO) process of a metal nanoparticle comprising at least one ligand. The metal of the metal nanoparticle of the present invention is selected from Ag, Au, Pd and Pt; particularly selected from Ag, Au or Pt; more particularly selected from Ag, Au or Pd; more particular selected from Ag or Au; even more particularly is Au.

The nanoparticle of the present invention has a mean diameter of equal or more than 0.1 and equal or less than 30 nm; preferably equal or more than 0.5 nm an equal or less 20 nm; more preferably equal or more than 0.8 nm and equal or less than 15 nm; preferably equal or more than 1 nm and equal or less than 6 nm; even more preferably around 5 nm.

In the context of the present invention, the nanoparticle "mean diameter" can be measured by techniques known in the art such as high-resolution transmission electron microscope (HR-TEM). For example, the mean diameter of the nanoparticles of the present invention may be calculated as the mean diameter (understood as arithmetic mean diameter) calculated from a statistically significant number of diameter measurements (over 50 or over 100) of nanoparticles obtained from electron microscope techniques such as high-resolution transmission electron microscope (HR-TEM) as known in the art.

### Ligand

The at least one ligand of the nanoparticle of the present invention is a compound comprising a thiol group. In particular, the ligand is an organic compound. Particularly, the at least one ligand is a compound comprising a thiol group and a carboxylic, phosphate or sulfate group. Preferably, the at least one ligand is a compound comprising a thiol group and a carboxylic group. More preferably, an organic compound comprising a number of carbon atoms of at least 7 carbon atoms.

In another particular embodiment, the at least one ligand comprises poly(ethylene glycol) (PEG); preferably further comprises a thiol group (-SH); more preferably further comprises a carboxylic group (-COOH); even more preferably the at least one ligand is a poly(ethylene glycol) 2-mercaptoethyl ether acetic acid.

The poly(ethylene glycol) (PEG) based ligands able to be used in the present invention may be prepared by polymerization of ethylene oxide and, preferably comprise a thiol group (-SH) and a carboxylic group (-COOH). The ligands of the present invention may be commercially available over a wide range of molecular weights.

In a particular embodiment, the ligand of the present invention has an average molecular weight of between 10 and 10000; preferably an average molecular weight of between 100 and 8000; more preferably of between 200 and 6000; even more preferably of around 500. Preferably, the ligand of the present invention is a poly(ethylene glycol) 2-mercaptoethyl ether acetic acid with an average molecular weight between 10 and 10000; preferably an average molecular weight between 100 and 8000; more preferably of between 200 and 6000; even more preferably of between 300 and 1000; even much more preferably of around 500. In the context of the present invention, the "molecular weight" of the ligand is calculated as the z-average molecular weight as measured by high performance liquid chromatography (HPLC).

In a particular embodiment, the at least one ligand of the present invention has a linear formula of HSC₂H₄O(C₂H₄O)ₙCH₂CO₂H; wherein n is between 2 and 10000.

In a more particular embodiment, the metal nanoparticle of the present invention is a gold nanoparticle, wherein said nanoparticle has a mean diameter of around 5 nm; wherein the at least one ligand is poly(ethylene glycol) 2-mercaptoethyl ether acetic acid; and wherein the at least one ligand has an average molecular weight of between 100 and 10000; preferably of between 250 and 5100; more preferably of about 500.

### Osmotic pressure

In the context of the present invention, the expression "osmotic pressure" is understood as the pressure that would have to be applied to a pure solvent to prevent it from passing into a given solution through a semipermeable membrane by osmosis; preferably to water passing through a semipermeable membrane. In a particular embodiment, the osmotic pressure gradient of the present invention is the osmotic pressure between the feed solution and the draw solution.

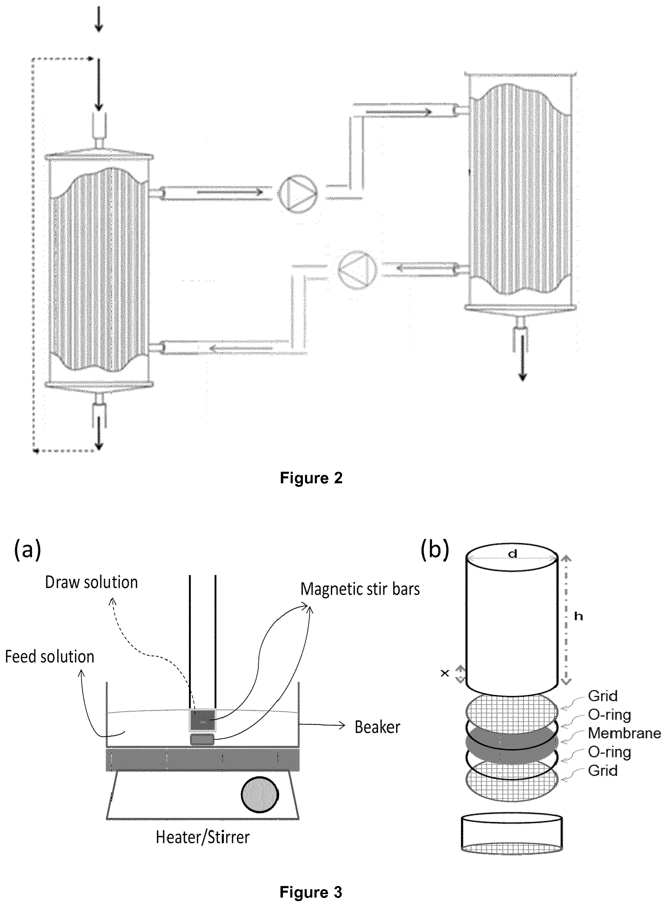

The osmotic pressure gradient values may be measured as known in the art; preferably by using the membrane/osmotic pressure measurement setup shown in Figure 3, basically the height of the draw solution in the cylinder is measured versus time and correlated to osmotic pressure calibration experiments using a range of NaCl solutions with controlled concentrations that give known osmotic pressures at the same temperature (such as 25°C).

In a particular embodiment, the metal nanoparticle of the present invention as draw solute in a solution draw generates an osmotic pressure gradient of at least 10 atm; more preferably of at least 40 atm; even more preferably of at least 60 atm; even more preferably of at least 80 atm; even more preferably of at least 90 atm; even much more preferably of about 94 atm.

In a more particular embodiment, the metal nanoparticle of the present invention is a gold nanoparticle, wherein said nanoparticle has a mean diameter of around 5 nm; wherein the at least one ligand is poly(ethylene glycol) 2-mercaptoethyl ether acetic acid; and wherein the at least one ligand comprises an average molecular weight of around 500 as draw solute in a draw solution generates an osmotic pressure gradient of about 94 atm.

In a more particular embodiment, the metal nanoparticle of the present invention is a gold nanoparticle, wherein said nanoparticle has a mean diameter of around 5 nm; wherein the at least one ligand is poly(ethylene glycol) 2-mercaptoethyl ether acetic acid; and wherein the at least one ligand comprises an average molecular weight of around 500 as draw solute in a draw solution generates an osmotic pressure gradient of about 94 atm; preferably with a water flux greater than or equal to about 10 LMH and less than or equal to about 30 LMH.

In a particular embodiment, the metal nanoparticle of the present invention as draw solute in a solution draw generates an osmotic pressure of at least 90 atm; preferably with a water flux greater than or equal to about 10 LMH (liter/m²/h) and less than or equal to about 30 LMH (liter/m²/h).

In a particular embodiment, the metal nanoparticle of the present invention comprises several ligands; preferably the metal nanoparticle of the present invention is completely functionalized with the ligand of the present invention. In a more particular embodiment, the functionalization of the metal nanoparticle of the present invention consist of the ligand of the present invention. In another particular embodiment, the metal nanoparticle of the present invention comprises the ligand of the present invention and further comprises other ligands such as those ligands with higher or lower molecular weight or ligands with various functionalities in order to optimize the surface packing of ligands on the nanoparticles.

### Method

In a second aspect, the invention is directed to a method comprising:
i. providing:
   - a feed solution comprising water and impurities;
   - a draw solution comprising water and the metal nanoparticles of the present invention in any of its particular embodiments;
   - a semi-permeable membrane having a first side and an opposite second side;
ii. contacting the first side of the semi-permeable membrane with the feed solution and the opposite second side with the draw solution, to obtain a diluted draw solution; and
iii. removing at least a portion of the draw solute from the diluted draw solution of step (ii).

### Feed solution

The feed solution of the present invention comprises impurities. In the context of the present invention the term "impurities" refers to the substances and/or particles that are present in the solvent (such as water) of the feed solution either diluted or dispersed in said solvent and make it dirty or of an unacceptable quality. Non-limiting examples of impurities present in the feed solution are clay, bacteria, large viruses, suspended solids, proteins, starches, colloids, silica, organics, drugs, dyes, pesticides, herbicides and multivalent, divalent or monovalent salts among others; preferably multivalent, divalent or monovalent salts; more preferably salts comprising Cl⁻¹.

in a particular embodiment, the feed solution of the present invention might be wastewater, industrial waste water or seawater; preferably seawater.

In a more particular embodiment, the feed solution of the present invention might be saline water such as seawater. In a particular embodiment, saline water is water comprising high concentration of dissolved salts; preferably a concentration of dissolved salts over 1000 ppm (parts per million); more preferably with a concentration of dissolved salts over 3000 ppm; even more preferably with a concentration of dissolved salts over 10000 ppm. In an even more particular embodiment, dissolved salts are multivalent, divalent or monovalent salts; preferably monovalent salts such as NaCl.

### Semipermeable membrane

The semi-permeable membrane of the present invention is permeable to the solvent of the feed solution; preferably to water. However, the semi-permeable membrane of the present invention is impermeable or minimally permeable to impurities of the feed solution, such as salts. As is known in the field, various materials can be used to manufacture the semi-permeable membrane of the present invention and there are commercially available membranes suitable for use in the present apparatus and process.

The size of the pores of the semipermeable membrane determines the types of impurities removed. Microfilter (MF) pores with diameters in the range of 0.01 to 1 microns typically remove impurities such as clay, bacteria, large viruses, and suspended solids. Ultrafilter (UF) pores with diameters in the 0.001 to 0.01 micron range typically remove impurities such as viruses, proteins, starches, colloids, silica, organics, and dyes. Nanofilter (NF) pores with diameters in the range of 0.0001 to 0.001 microns typically remove impurities such as sugar, pesticides, herbicides and some divalent ions. Reverse osmosis, or hyperfilters, with pore diameters (of 0.1 to 1.0 nanometers, where 1 nanometer=0.001 micron) are capable of removing monovalent salts. Non-limiting examples of semipermeable membrane materials are cellulose acetates, nitrates, and esters (CA, CN, and CE), polysulfone (PS), polyether sulfone (PES), polyacrilonitrile (PAN), polyamide, polyimide, polyethylene and polypropylene (PE and PP), polytetrafluoroethylene (PTFE), polyvinylidene fluoride (PVDF), polyvinylchloride (PVC) and derivatives. RO (hyperfilter) and some nanofilter membranes might be used for desalination purposes in forward osmosis. Nano, ultra and microfilters might be used for wastewater treatment, depending on the particle size that is the object of the wastewater treatment. The selection of the appropriate membrane will depend, in part, on the nature of the impurities in the feed solution or of the feed solution input and/or the required characteristics of the purified water output.

In a particular embodiment the semi-permeable membrane of the present invention is a thin-film composite membrane (TFC or TFM) as known in the art. In a more particular embodiment, the semi-permeable membrane of the present invention comprises three layers; preferably a thin polyamide layer (<200 nm) deposited on top of a polyethersulfone or polysulfone porous layer (about 50 microns) on top of a non-woven fabric support sheet.

In one embodiment, the semi-permeable membrane comprises a pH tolerance within a pH range of 0 - 14; in another embodiment, the semi-permeable membrane comprises a pH tolerance within a pH range of 2 - 13.

In one embodiment, the semi-permeable membrane comprises a TDS (Total Dissolved Solids) rejection of over 95% salt rejection; preferably over 98% salt rejection; more preferably over 99% salt rejection; even more preferably over 99.2% salt rejection.
In a particular embodiment the semi-permeable membrane of the present invention is a thin-film composite membrane with between 10 and 40 Lmh flux under a test condition of 1 m NaCl as draw solute and deionized water as feed solution at 23°C and crossflow velocity of 30 cm/s; preferably about 20 Lmh flux.

### Draw solution

The draw solution of the present invention comprises the metal nanoparticles of the present invention in any of their particular embodiments and water. In a particular embodiment, the draw solution of the present invention consist of the metal nanoparticles of the present invention in any of their particular embodiments and water; preferably as a suspension in water.

In an embodiment, the metal of the metal nanoparticles of the draw solution is in a concentration of between 0.1 and 100 g/l; preferably of between 1 and 80 g/l; more preferably of between 5 and 75 g/l; even more preferably of between 30 and 70 g/l; even more preferably about 51 g/l.

In a preferred embodiment, the metal nanoparticle of the draw solution of the present invention, comprises at least one ligand;
wherein the metal of the metal nanoparticle is Au;
wherein the metal nanoparticle has a mean diameter equal or more than 0.1 and equal or less than 2 nm; and
wherein the at least one ligand is a compound comprising a thiol group; preferably a compound further comprising a carboxylic group; more preferably a poly(ethylene glycol) 2-mercaptoethyl ether acetic acid; even more preferably a poly(ethylene glycol) 2-mercaptoethyl ether acetic acid with an average molecular weight between 100 and 1000; even more preferably the gold concentration in the draw solution is about 51 g/l.

In a particular embodiment, the metal nanoparticles are dispersed in the draw solution; preferably, are homogeneously dispersed in the draw solution (i.e. the metal nanoparticles do not aggregate or agglomerate in the draw solution).

Thus, the draw solution of the present invention is a stable solution; preferably a stable solution over time; more preferably a stable solution at least 1 hour; more preferably is stable at least 5 h; even more preferably a stable solution of at least 24 hours; preferably at least one week; more preferably at least a month.

### Step (ii)

The step (ii) of the method of the present invention is directed to contacting the first side of the semi-permeable membrane with the feed solution and the opposing second side with the draw solution to obtain a diluted draw solution.

In particular, in step (ii) of the method of the present invention after contacting the first side of the semi-permeable membrane with the feed solution and the opposing second side with the osmotic draw solution, solvent from the feed solution flows through the semipermeable membrane to the draw solution, diluting the draw solution. The flow of solvent (such as water flow) through the semipermeable membrane is drawn by an osmotic pressure gradient between the feed solution and the draw solution.

The higher the osmotic pressure gradient, the higher the flow of solvent through the semipermeable membrane.

In a particular embodiment, the method of the present invention is a continuous method. More particularly, steps (ii) and (iii) are repeated.

In a particular embodiment, the net flow of solvent is between 1 and 40 LMH (liter/m²/h); preferably between 5 and 30 LMH (liter/m²/h); more preferably between 10 and 20 LMH (liter/m²/h)_{.}

In a more particular embodiment, the flow of solvent of the invention increases when the osmotic pressure gradient increases. In another particular embodiment, the net flow of solvent is proportional to the osmotic pressure gradient; preferably directly proportional.

In another particular embodiment, the flow of solvent of the invention decreases when the osmotic pressure gradient value decreases. Particularly, when the osmotic pressure gradient value is close to zero, the flow of solvent stops.

The inventors of the present invention have surprisingly found that by using the metal nanoparticle as draw solute in forward osmosis (FO) processes, when the osmotic pressure gradient value is close to zero or negative, there is no reverse flow of draw solute through the membrane.

As mentioned above, the flow of solvent may be a flow of water. In a more particular embodiment, the solvent of the present invention is water.

In a particular embodiment, the step (ii) of the method of the present invention leads to a diluted draw solution and a concentrated feed solution. In a more particular embodiment, the concentrated feed solution of step (iii) of the method of the present invention is recirculated as feed solution in step (i) of the method of the present invention; preferably water is added before recirculating it as feed solution.

In a particular embodiment, the feed solution obtained in step (ii) more concentrated than the original feed solution; preferably is a 10% more concentrated; more preferably is a 20% more concentrated; even more preferably is a 30% more concentrated; even much more preferably is a 50% more concentrated.

In a particular embodiment, the volume of the feed solution obtained in step (ii) is reduced to be a 90% of its original volume; preferably to be an 80%; more preferably to be a 40%; even more preferably to be a 20%.

In a particular embodiment, when the first side of the semi-permeable membrane is in contact with the feed solution and the opposite second side is in contact with the osmotic draw solution an osmotic pressure gradient is created between the feed solution and the draw solution; preferably an osmotic pressure of at least 10 atm; preferably of at least 20 atm; more preferably of at least 40 atm; more preferably at least 60 atm, even more preferably of at least 80 atm.

In a particular embodiment, when the first side of the semi-permeable membrane is in contact with the feed solution and the opposite second side is in contact with the osmotic draw solution an osmotic pressure gradient is created between the feed solution and the draw solution; preferably an osmotic pressure of between 1 and 100 atm; more particularly of between 10 and 90 atm; even more preferably of between 30 and 85 atm.

### Step (iii)

Step (iii) of the method of the present invention comprises removing at least a portion of the draw solute from the diluted draw solution of step (ii).

In a particular embodiment, the step (iii) of the method of the present invention comprises removing at least a portion of the draw solute from the diluted draw solution by filtration, concentration or evaporation, extraction and/or a combination thereof; preferably by filtration or extraction methods; more preferably by extraction.

In a particular embodiment, the step (iii) of the method of the present invention comprises removing at least a portion of the draw solute from the diluted draw solution by concentration or evaporation; preferably by evaporation. In a particular embodiment, the concentration step of the process of the present invention is performed in a unit selected form thin-film evaporator, wiped film evaporator, falling film evaporator, forcer circulator evaporator, scrapped surface evaporator and agitated thin film evaporator, preferably a thin-film evaporator.

In a particular embodiment, the step (iii) of the method of the present invention comprises removing at least a portion of the draw solute from the diluted draw solution by extraction, preferably by a solvent liquid-liquid extraction step; more preferably with a water-immiscible solvent in order to yield an organic phase comprising the recovered draw solute recovered and an aqueous phase (diluted draw solution left).

In a more particular embodiment, the extraction of step (iii) is performed using means able for extraction, preferably extraction columns, centrifugal extractors, thin layer extractors, or a mixer-settler device; more preferably extraction columns or mixer-settler devices.

In a particular embodiment, the step (iii) of the method of the present invention comprises removing at least a portion of the draw solute from the diluted draw solution by filtration.

In the present invention the term "filtration" is interpreted as a form of solid/liquid separation and involves the separation of the draw solute from the diluted draw solution.

The filtration technique used in step (iii) of the present invention may be selected from angular filtration and tangential flow filtration. In the context of the present invention the expression "angular filtration" refers to a filtration process wherein the feed-flow and the filtration-flow direction form an angle between 90 and 180 degrees, preferably between 100 and 170 degrees. In a more particular embodiment the feed flow is the diluted draw solution. In the context of the present invention the expression "tangential-flow filtration" or "cross-flow filtration" refers to a filtration wherein the feed flow and the filtration flow direction form an angle of about 90 degrees. The expert in the art will select the filtration technique more adequate for the step (iii) of the present invention.

In a particular embodiment the filtration of step (iii) is an ultrafiltration or a nanofiltration step; preferably an ultrafiltration. In the context of the present invention, the term "ultrafiltration" applies to the removal of particles below 0.1 micron. Ultrafiltration covers the finest distinct particles (such as 30 colloids), but its lower limits is usually set in molecular weight terms, measured in Daltons. Below ultrafiltration (UF) comes nanofiltration (NF) and reverse osmosis (RO) [Filters and Filtration Handbook, Ken Sutherland, 2008, published by Elsevier, Amsterdam].

In a particular embodiment, the at least a portion of the draw solute of step (iii) is at least a 5 wt% of the draw solute in the draw solution of step (i); preferably at least a 10 wt%, more preferably at least a 20 wt%; even more preferably at least a 40 wt%; even much more preferably at least a 95 wt% of the initial draw solute.

In another particular embodiment, the at least a portion of the draw solute of step (iii) is all the initial draw solute.

In a particular embodiment, step (iii) leads to clean water (i.e. water with no impurities). In a more particular embodiment, step (iii) leads to desalinized water; preferably to water with less than 1000 ppm of salts; more preferably to water with less than 100 ppm of salts.

### Recovery

In a particular embodiment, the at least a portion of the draw solute removed from the diluted draw solution in step (iii) is reused in the draw solution of step (i).

In a particular embodiment, the draw solute are the metallic nanoparticles of the present invention in any of their particular embodiments.

Surprisingly, an advantage of the nanoparticles of the present invention over the particles of the art is the higher stability of the nanoparticles of the present invention that allow their recovery and recycling while maintaining their characteristics.

In a particular embodiment, the method of the present invention comprises recovering and reusing the at least a portion of the draw solute of step (iii). In a particular embodiment the at least a portion of the draw solute is recovered, washed and reused. In a particular embodiment the at least a portion of the draw solution is reused as draw solute; preferably by recirculating and using it as draw solute.

In a particular embodiment, the method of the present invention is performed at room temperature (between 15 and 35 °C; preferably between 20 and 30°C; more preferably around 25°C) and at atmospheric pressure (about 1 atm).

### Apparatus

In another aspect, the present invention is directed to an apparatus for carrying out the method of the present invention in any of its particular embodiments comprises
- a first unit comprising a semi-permeable membrane; preferably an ultrafiltration semipermeable membrane.

In another particular embodiment, the present invention is directed to an apparatus for carrying out the method of the present invention in any of its particular embodiments comprises
- a first unit comprising a semi-permeable membrane; and
- a second unit; preferably a second filtration unit;
wherein both units are fluidically communicated.

In another embodiment, the first unit of the present invention comprises
- a filter housing comprising a first and a second inlet and a first and a second outlet; and
- the semipermeable membrane allocated within the filter housing;
wherein the first and the second inlet and the first and the second outlet of the filter housing are fluidically communicated.

In another embodiment, the first unit of the present invention is a forward osmosis unit.

In a particular embodiment, the second unit of the present invention is selected from a filtration, a concentration, an evaporation or an extraction unit and/or a combination thereof.

In another embodiment, the second unit of the present invention comprises
- a filter housing comprising a first and a second inlet and a first and a second outlet; and
- the filtration membrane allocated within the filter housing;
wherein the first and the second inlet and the first and the second outlet of the filter housing are fluidically communicated.

In another embodiment, the second unit of the present invention is a filtration unit; preferably an ultrafiltration unit comprising an ultrafiltration membrane.

In another particular embodiment, the present invention is directed to an apparatus for carrying out the method of the present invention in any of its particular embodiments comprises
- a first unit comprising
   - a filter housing comprising a first and a second inlet and a first and a second outlet; and
   - a semipermeable membrane allocated within the filter housing;
   wherein the first and the second inlet and the first and the second outlet of the filter housing are fluidically communicated; and
- a second filtration unit comprising
   - a filter housing comprising a first and a second inlet and a first and a second outlet; and
   - the filtration membrane allocated within the filter housing;
   wherein the first and the second inlet and the first and the second outlet of the filter housing are fluidically communicated;
wherein both units are fluidically communicated.

In particular, a feed solution is fed to the first unit through the first inlet and a concentrated feed solution exits through the first outlet of the first unit; in addition, a draw solution is fed to the second inlet of the first unit and a diluted draw solution exits through the second outlet of the first unit. The diluted draw solution may be fed to the second unit to obtain a concentrated draw solution and a clean solvent (such as clean water). The concentrated draw solution may be recirculated to the first unit.

### System

In a further aspect, the present invention is directed to a system comprising:
- a feed solution comprising water and impurities;
- a draw solution comprising water and metal nanoparticles as defined in any of the particular embodiments of the present invention; and
- a semi-permeable membrane having a first side and an opposite second side,
wherein the first side of the semi-permeable membrane is in contact with the feed solution and the opposing second side is in contact with the osmotic draw solution.

As used herein, the terms "about" or "around" means a slight variation of the value specified, preferably within 10 percent of the value specified. Nevertheless, the term "about" or the term "around" can mean a higher tolerance of variation depending on for instance the experimental technique used. Said variations of a specified value are understood by the skilled person and are within the context of the present invention. Further, to provide a more concise description, some of the quantitative expressions given herein are not qualified with the term "about". It is understood that, whether the term "about" is used explicitly or not, every quantity given herein is meant to refer to the actual given value, and it is also meant to refer to the approximation to such given value that would reasonably be inferred based on the ordinary skill in the art, including equivalents and approximation due to the experimental and/or measurement conditions for such given value.

All the features described in this specification (including the claims, description and drawings) and/or all the steps of the described method can be combined in any possible combination, with the exception of combinations of such mutually exclusive features and/or steps.

The invention will be further illustrated by means of examples which should not be interpreted as limiting the scope of the claims.

### EXAMPLES

The invention is illustrated by means of the following example that in no case limits the scope of the invention.

### Example 1: Forward Osmosis (FO) test results

The following gold nanoparticles were used as draw solutes in a Forward Osmosis (FO) process:
- gold nanoparticles with mean diameters of 5 nm functionalized with (2-carboxyethyl)-O'-(2-mercaptoethyl)heptaethylene glycol (SH-PEG-COOH) ligands with average molecular weights of 280, 500 and 5000 (Au-SH-PEG280-COOH, Au-SH-PEG500-COOH and Au-SH-PEG5000-COOH, respectively); and
- gold nanoparticles with mean diameters of 1 nm functionalized with different mercapto alkyl acids (Au-SH-(CH₃)₇-COOH, Au-SH-(CH₃)₅-COOH, Au-SH-(CH₃)₅-COOH) were used as draw solutes in a Forward Osmosis (FO) process.

A draw solution was prepared for each of the nanoparticles by preparing dispersions of the nanoparticles in water. The characteristics of the obtained draw solutions were analyzed by thermogravimetric analysis (TGA) and inductively coupled plasma atomic emission spectroscopy (ICP OES) and their results are shown in Table 1.

Concentration values of the nanoparticles in the draw solutions were measured as Au concentration (in g/L) by inductively coupled plasma atomic emission spectroscopy (ICP OES). When the concentration of nanoparticles in the draw solution is over a certain concentration, said solution increases rapidly in viscosity making the dispersion difficult to handle and also negatively impacting the performance as a draw solution. Thus, maximum concentration values of the nanoparticles in stable feed dispersion were determined. Results showed that the different nanoparticles tested, reached different maximum concentration values. Surprisingly, the higher value (68.1 g/l of Au in the draw solution) was obtained using Au-SH-PEG280-COOH particles. In all experiments, the feed solution comprises deionized water.
In addition, the Osmotic pressure (POs) gradients reached between each of the draw solutions and the feed solution when separated by a semipermeable membrane were measured as follows:
The forward osmosis membrane used in experiments was thin film composite membrane manually cut from a SeaPack® desalination system from Hydration Technology Innovations LLC (HTI). The membrane was cut into a 1.7 cm diameter circle with resulting total membrane surface area of 0.00031416 m². The specified salt rejection is 97%. The membrane/osmotic pressure measurement setup is shown in Figure 3. Temperature was controlled at 25°C using a hotplate, and two magnetic stirrers were used to agitate the feed solution (contained in a 500 mL glass beaker) and draw solution (contained in a glass cylinder) as shown in Figure 3. The membrane was assembled in a housing as depicted in Figure 3b. The cylinder height (h) was 55 cm, and the cylinder diameter (d) was 1.7 cm, matching the membrane diameter. Initial feed volume of deionized water was 350 mL, and initial draw solution volume added to the cylinder was 0.40 mL. The liquid height in the cylinder was measured versus time and correlated to osmotic pressure based on calibration experiments using a range of NaCl solutions with controlled concentrations that give known osmotic pressures. The greater PO (atm) value was reached when using Au-SH-PEG500-COOH nanoparticles as draw solutions (94 atm).

**Table 1**

| | Ligand | | ICP | | TGA | | POs (mOSm) | POs/NP (mOSm/gNP) | PO (atm) |
|---|---|---|---|---|---|---|---|---|---|
| | | Dp (nm) | Au (g/l) | S (g/l) | Au (% wt/wt) | S (% wt/wt) | | | |
| Au | SH-PEG280-COOH | 5 | 68.1 | | | | | | 45 |
| Au | SH-PEG500-COOH | 5 | 51.20 | 1.26 | 15.67 | 13.16 | 3805 | 43 | 94 |
| Au | SH-PEG5000-COOH | 5 | 7.9 | | | | | | 11 |
| Au | SH-(CH₃)₇-COOH | 1 | 1.11 | | | | | | 3.8 |
| Au | SH-(CH₃)₅-COOH | 1 | 2.31 | | | | | | 9.6 |
| Au | SH-(CH₃)₃-COOH | 1 | 1.83 | | | | | | 11.1 |

### Example 2: Comparative experiment

The maximum concentration value reached for a stable aqueous dispersion of FeO nanoparticles with mean diameters of 11.7 nm functionalized with poly(ethylene glycol) (PEG-COOH) ligands with average molecular weight of 250 is 15 g/L. The maximum osmotic pressure achieved was 74 atm. During particle recovery and recycle, the particles became unstable and agglomerated resulting in significant loss off performance.

On the contrary, Au-SH-PEG280-COOH particles reach maximum concentration values of 68.1 g/l and corresponding osmotic pressure of 94 atm.

## Claims

1. Use of a metal nanoparticle comprising at least one ligand;
wherein the metal of the metal nanoparticle is selected from Ag, Au, Pd and Pt;
wherein the nanoparticle has a mean diameter equal or more than 0.1 and equal or less than 30 nm; and
wherein the at least one ligand is a compound comprising a thiol group;
as draw solute in forward osmosis (FO) processes.

2. The use according to claim 1 wherein the metal of the metal nanoparticle is selected from Ag and Au.

3. The use according to claim 2 wherein the metal of the metal nanoparticle is Au.

4. The use according to any of the previous claims wherein the nanoparticle has a mean diameter of equal or more than 0.5 nm and equal or less than 20 nm.

5. The use according to claim 4 wherein the nanoparticle has a mean diameter of equal or more than 1 nm and equal or less than 6 nm.

6. The use according to any of the previous claims wherein the at least one ligand is a compound further comprising a carboxylic group.

7. The use according to claim 6 wherein the at least one ligand is a poly(ethylene glycol) 2-mercaptoethyl ether acetic acid.

8. The use according to claim 7 wherein the at least one ligand has an average molecular weight of between 200 and 6000.

9. The use according to any of the previous claims wherein the metal nanoparticle as defined in any of the previous claims in a solution generates an osmotic pressure of about 94 atm.

10. A method comprising:
i. providing:
- a feed solution comprising water and impurities;
- a draw solution comprising water and the metal nanoparticles as defined in any of claims 1-9;
- a semi-permeable membrane having a first side and an opposite second side;
ii. contacting the first side of the semi-permeable membrane with the feed solution and the opposite second side with the draw solution to obtain a diluted draw solution; and
iii. removing at least a portion of the draw solute from the diluted draw solution of step (ii).

11. The method according to claim 10 wherein at least a portion of the draw solute is recovered and optionally reused.

12. The method according to any of claims 10 to 11 wherein during step (ii) water flows from the feed solution to the draw solution through the semi-permeable membrane draw by an osmotic pressure gradient.

13. The method according to claim 12 wherein the osmotic pressure is greater than or equal than 60 atm.

14. Apparatus for carrying out the method as defined in any of claims 10-13 comprising:
- a first unit comprising a semi-permeable membrane.

15. A system comprising:
- a feed solution comprising water and impurities;
- a draw solution comprising water and metal nanoparticles as defined in any of claims 1-9; and
- a semi-permeable membrane having a first side and an opposite second side,
wherein the first side of the semi-permeable membrane is in contact with the feed solution and the opposite second side is in contact with the osmotic draw solution.
